# EUROPEAN PATENT APPLICATION

(11) **EP 4 723 030 A1**
(43) Date of publication of application: **08.04.2026**
(21) Application number: 23938499.3
(22) Date of filing: 24.05.2023
(51) Int. Cl.: G06T 7/00

(54) **CONTROL METHOD, CONTROL PROGRAM, AND INFORMATION PROCESSING DEVICE**

(71) Applicant: FUJITSU LIMITED, Kawasaki-shi, Kanagawa 211-8588 (JP)
(72) Inventor: SEPTIANA, Lina, Kawasaki-shi, Kanagawa 211-8588 (JP)
(74) Representative: Hoffmann Eitle
(86) International application number: PCT/JP2023/019350
(87) International publication number: WO 2024/241536

(57) **Abstract**

In a control method, a computer executes a process including, when a plurality of people are detected from an image including a person to be authenticated who has been successfully authenticated using identification information, controlling a target detection area for detecting the person in the image.

## Description

### TECHNICAL FIELD

The present invention relates to a control method, a control program and an information processing device.

### BACKGROUND ART

In continuous authentication, highly accurate authentication is performed at check-in to identify the user's ID, and upon successful authentication, information about the user's appearance is acquired and linked to the user's ID as registered information. For example, a method has been disclosed for acquiring information about the user's appearance by photographing the appearance with a camera (see, for example, Patent Document 1).

### CITATION LIST

### PATENT DOCUMENT

PATENT DOCUMENT 1: Japanese Patent Application Publication No. 2021-531539

### SUMMARY OF THE INVENTION

### TECHNICAL PROBLEM

However, when multiple users check in, there is a risk that people other than the target person will appear in the image captured by the camera. In this case, if the target person's detection accuracy is low, there is a risk that information of the appearance features of other people will be acquired.

In one aspect, the present invention aims to provide a control method, a control program, and an information processing device that can improve the target person detection accuracy.

### SOLUTION TO PROBLEM

In one aspect, in a control method, a computer executes a process including: when a plurality of people are detected from an image including a person to be authenticated who has been successfully authenticated using identification information, controlling a target detection area for detecting the person in the image.

### ADVANTAGEOUS EFFECTS OF INVENTION]

The detection accuracy of the target person can be improved.

### BRIEF DESCRIPTION OF THE DRAWINGS

[FIG. 1] Provided is a diagram for explaining an overview of continuous authentication technology.
[FIG. 2] (a) and (b) are diagrams illustrating details of check-in.
[FIG. 3] Provided is a diagram illustrating a case where multiple people are reflected in an image acquired by the camera.
[FIG. 4] (a) is a block diagram illustrating an overall structure of a biometric authentication system according to a first embodiment, and (b) is a functional block diagram representing each function of an information processing device.
[FIG. 5] (a) is a diagram view of an entrance area seen from above, (b) is a diagram illustrating an example of a registered biometric data table stored in a registered data storage, and (c) is a diagram illustrating an example of an image acquired by an acquirer from a linking camera.
[FIG. 6] (a) to (c) are diagrams for explaining a direction in which a target person is facing, and (d) is a diagram for illustrating a size of a person area in an image.
[FIG. 7] (a) is a diagram illustrating a case where multiple users check in in order, (b) is a diagram illustrating a case where multiple person areas are detected, and (c) is a diagram illustrating a case where multiple people areas are detected.
[FIG. 8] Provided is a diagram illustrating an example of a registration information table stored in a registration information storage.
[FIG. 9] Provided is a flow chart of an example of an operation of an information processing device.
[FIG. 10] Provided is a flow chart of an example of an operation of an information processing device.
[FIG. 11] (a) is a diagram illustrating a case where an angle of view is wide, and (b) is a diagram illustrating a case where an angle of view is narrow.
[FIG. 12] (a) to (c) are diagrams illustrating a case where a plurality of people are reflected in a detection target area.
[FIG. 13] (a) and (b) are diagrams illustrating a case where multiple people overlap in a detection target area.
[FIG. 14] (a) and (b) are diagrams illustrating an angle of a linking camera.
[FIG. 15] (a) and (b) are diagrams illustrating a distance between a biometric sensor and a user.
[FIG. 16] (a) to (c) are diagrams illustrating variations in a person area.
[FIG. 17] Provided is a block diagram for explaining a hardware configuration of an information processing device.

### DESCRIPTION OF EMBODIMENTS

Biometric authentication is a technology that uses biometric feature such as fingerprints, facial features, or veins to verify a user's identity. When a user's identity is required, biometric data acquired by a biometric sensor is compared with pre-registered biometric data to determine whether the similarity exceeds a threshold for identity verification. Biometric authentication is used in a variety of fields, including bank ATMs and access control. In recent years, the biometric authentication has also begun to be used for cashless payments at supermarkets and convenience stores.

These biometric authentication methods are "point" authentication, performed at specific authentication spots, such as in front of an authentication device. However, with "point" authentication, the authentication state is interrupted when the user leaves the authentication spot. Therefore, when a user accesses a service again or at a location where authentication is required multiple times, authentication are repeated each time. Therefore, there is a need for continuous authentication technology that eliminates the need for repeated authentication, allowing users to continue using services with a single authentication.

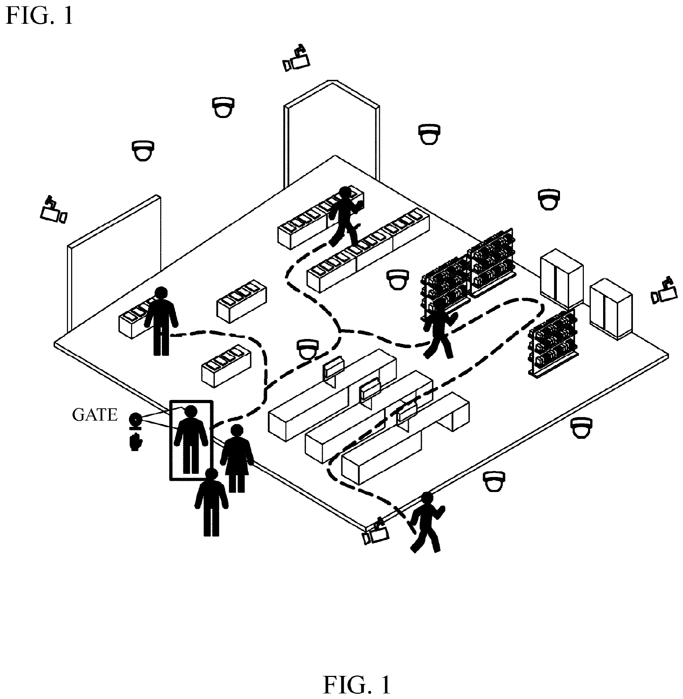

Here, an overview of continuous authentication technology will be described. FIG. 1 is a diagram explaining the overview of continuous authentication technology. Continuous authentication involves three main authentication steps:

First, there is authentication at check-in. At a gate or other location, the user performs highly accurate authentication using techniques such as palm vein authentication or facial recognition to identify the user's ID. After successful authentication, a camera captures the user's appearance, acquiring visual feature information that is then linked to the user's ID as registered feature information.

Next, there is a line authentication. Using matching feature information acquired continuously over time using one or more cameras and registered feature information, the person captured on a camera is maintained as a successfully authenticated user.

Next, there is re-authentication. For example, if the user enters a camera's blind spot due to an obstacle or a pillar, re-authentication is performed if the authentication state is interrupted.

By performing these types of authentication, continuous authentication can be achieved. This allows users to receive services without having to authenticate multiple times.

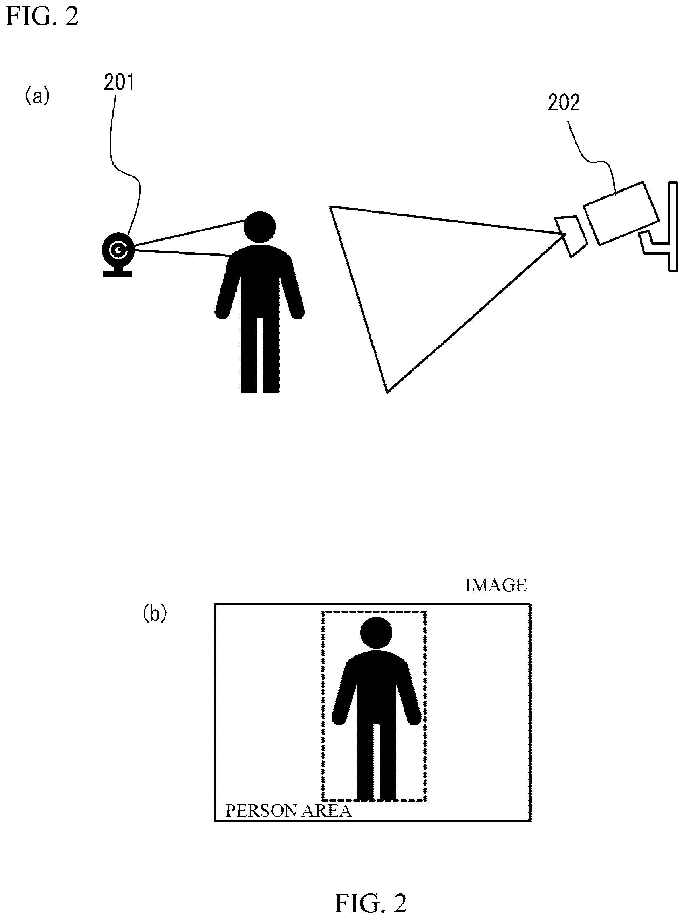

Here, the details of check-in will be explained. FIG. 2(a) and FIG. 2(b) are diagrams illustrating check-in details. As illustrated in FIG. 2(a), highly accurate biometric data, such as a facial image captured by a face camera or a vein image captured by a vein sensor, is acquired from a biometric sensor 201 for authentication. This allows the ID or name of the person checking in to be identified.

At this time, an image of the target person is acquired using a camera 202. Next, as illustrated in FIG. 2(b), a person area (Bbox: Bounding box) is detected from the image. Next, the person in the image is analyzed from the person area to extract visual feature information for identifying the person. This feature information in this case includes visual information such as clothing color, physique, facial features, and behavioral features. This feature information is linked to the person's ID as registered feature information. This registered visual feature information can then be used for subsequent continuous authentication. Note that behavioral features are, for example, skeletal information including the person's joints.

However, when capturing a subject's image using the camera 202, other people may appear in the image. In this case, it may be difficult to accurately extract the person area corresponding to the target person. For example, check-in is a process that registers a user's entry into a store by performing a specified process when the user enters the store. A terminal may be used to read information about the user's entry from an image attached to a predetermined location in the store (for example, the entrance). The store displays products for sale to users who have checked in.

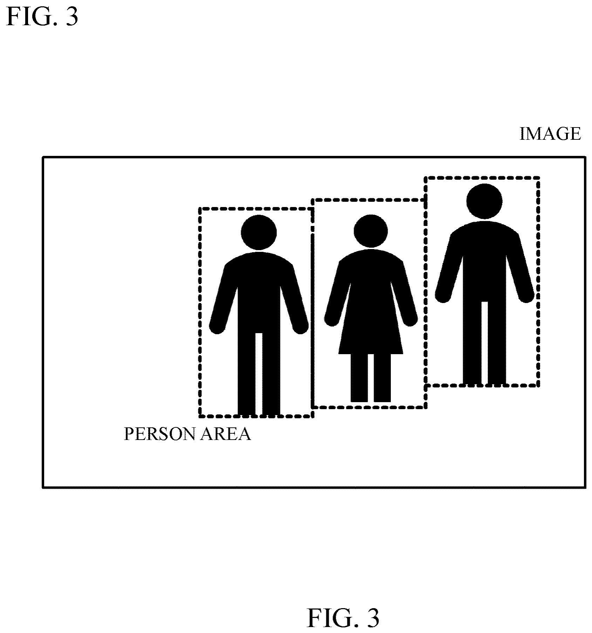

FIG. 3 is a diagram illustrating an example of a case in which multiple people appear in an image captured by the camera 202 in FIG. 2(a). As illustrated in FIG. 3, three people appear in the image. In this case, three person areas are detected, and there is a risk that the areas may be linked to the appearance feature of people other than the target person.

Therefore, the following embodiment describe a control method, a control program, and an information processing device that can improve the detection accuracy of the target person.

### [First embodiment]

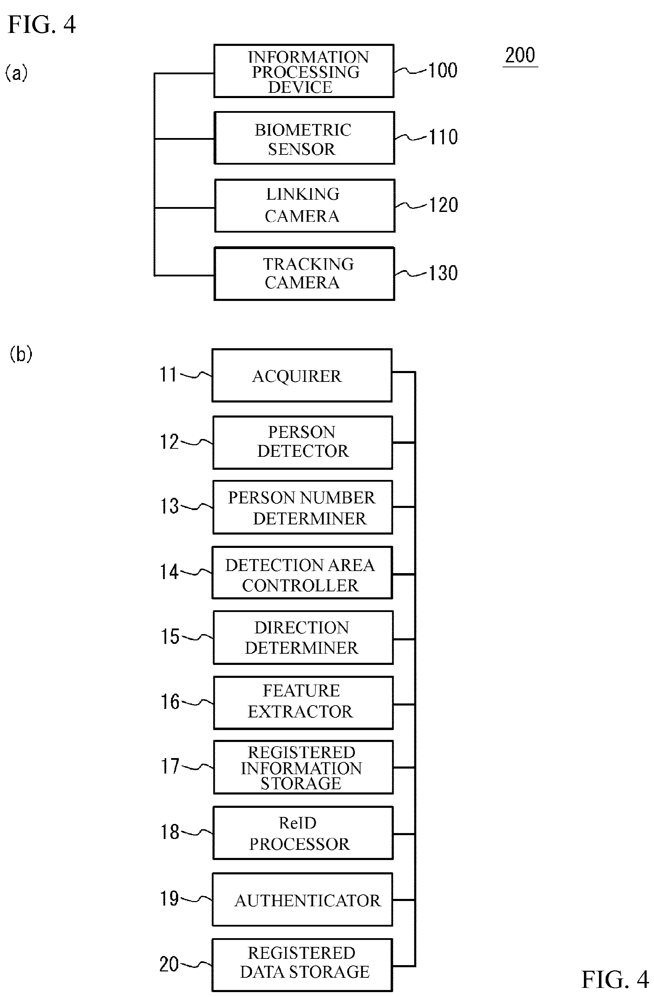

Details are provided below. FIG. 4(a) is a block diagram illustrating the overall configuration of a biometric authentication system 200 according to an embodiment. As illustrated in FIG. 4(a), the biometric authentication system 200 includes an information processing device 100, a biometric sensor 110, a linking camera 120, and a tracking camera 130. These devices are connected via telecommunications lines.

The biometric sensor 110 is installed at the gate of the continuous authentication space or the like, near the linking camera 120. The biometric sensor 110 is not particularly limited as long as it can acquire biometric data of a user checking in with high accuracy. For example, if veins are used as the biometric modality, the biometric sensor 110 may be a vein sensor using near-infrared rays or the like. If a fingerprint is used as the biometric modality, the biometric sensor 110 may be a capacitance-type fingerprint sensor or the like. If a face is used as the biometric modality, the biometric sensor 110 may be a face camera or the like.

The linking camera 120 is a camera installed at the gate of the continuous authentication space or elsewhere, and is positioned to easily capture visual feature information about a person. The tracking camera 130 is a camera for tracking a person in the continuous authentication space, and is installed on the ceiling or elsewhere to facilitate tracking. There may be one or more of the tracking cameras 130.

FIG. 4(b) is a functional block diagram of the functions of the information processing device 100. As illustrated in FIG. 4(b), the information processing device 100 functions as an acquirer 11, a person detector 12, a person number determiner 13, a detection area controller 14, a direction determiner 15, a feature extractor 16, a registration information storage 17, a ReID processor 18, an authenticator 19, and a registration data storage 20. The registration data storage 20 stores the registered biometric data of each user. This registered biometric data is registered in advance by each user along with their ID, name, or the like.

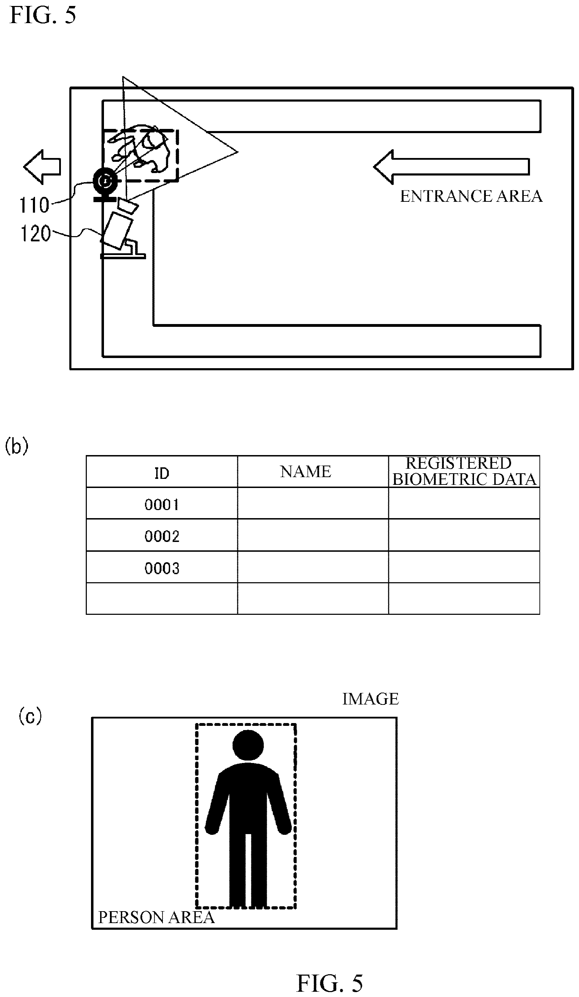

FIG. 5(a) is a diagram illustrating an example of a single user checking in. FIG. 5(a) is a diagram of the entrance area viewed from above. As illustrated in FIG. 5(a), the biometric sensor 110 and the linking camera 120 are installed at the gate of the entrance area. The user enters the entrance area, approaches the gate, and stands still in a location where the biometric sensor 110 can acquire the user's biometric data. This causes the user to stay still within the photographing range of the linking camera 120.

First, the biometric sensor 110 acquires the target person's biometric data for matching and sends it to the authenticator 19. The authenticator 19 compares the biometric data for matching with each piece of registered biometric data stored in the registration data storage 20. FIG. 5(b) is a diagram of an example of a registered biometric data table stored in the registration data storage 20. As illustrated in FIG. 5(b), the registered biometric data table stores registered biometric data linked to each user's ID or name. For example, the authenticator 19 calculates the similarity between the biometric data for matching and each piece of registered biometric data. The authenticator 19 identifies the target person as a user of registered biometric data whose similarity exceeds a threshold. This makes it possible to identify the target person's ID.

In parallel, the acquirer 11 acquires an image from the linking camera 120. FIG. 5(c) is a diagram illustrating an image acquired by the acquirer 11 from the linking camera 120. The person detector 12 detects a person area in the image. Methods for detecting the person area include detecting a person area using background subtraction and detecting a person feature from the input image by learning about the person's features in advance. In FIG. 5(c), the area surrounded by the dotted line is the person area. The person number determiner 13 determines the number of people appearing in the image. In the example of FIG. 5(c), the person number determiner 13 determines the number of people to be one.

In this case, the detection area controller 14 does not narrow the detection target area for detecting person from the image.

Next, the direction determiner 15 determines whether the target person is facing a predetermined direction. For example, the direction determiner 15 determines whether the target person is facing the linking camera 120.

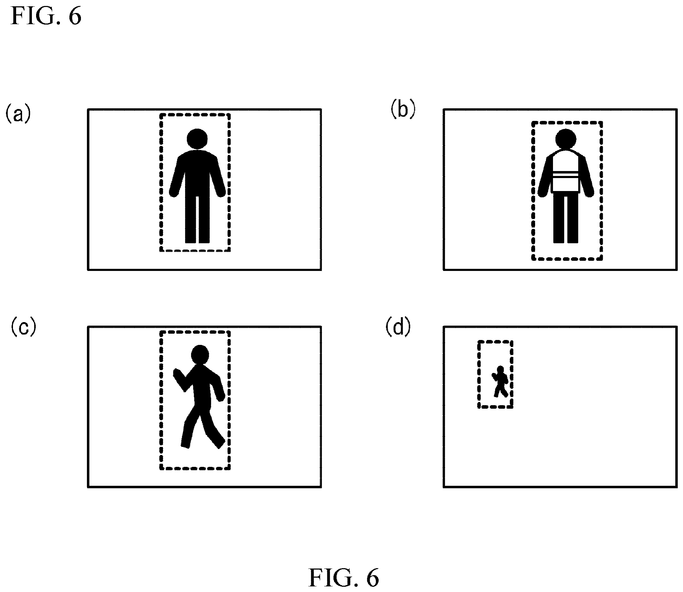

FIG. 6(a) to FIG. 6(c) are diagrams for explaining the direction in which the target person is facing. For example, as illustrated in Fig. 6B, if the target person is carrying a luggage on his/her back, if the luggage is captured in the image, the target person is facing away from the linking camera 120. Therefore, in this case, it is determined that the target person is not facing in the predetermined direction. Whether luggage is captured in the image can be determined by prior learning of the image or the like.

For example, as illustrated in FIG. 6(c), even if the target person is facing sideways relative to the linking camera 120, it is determined that the target person is not facing the predetermined direction. Whether the target person is facing sideways relative to the linking camera 120 can be determined by prior learning of the image or the like.

For example, as illustrated in FIG. 6(a), if the target person is facing the direction of the linking camera 120, it is determined that the target person is facing the predetermined direction. Whether the target person is facing the direction of the linking camera 120 can be determined by prior learning of the image or the like.

The direction determiner 15 may also determine whether the size of the person area in the image is equal to or greater than a threshold. For example, as illustrated in FIG. 6(d), if the size of the person area in the image is equal to or greater than a threshold, it is determined that the size of the person area in the image is equal to or greater than the threshold. If the direction determiner 15 does not determine that the size of the person area in the image is equal to or greater than the threshold, it may treat the situation as if the target person is not determined to be facing a predetermined direction.

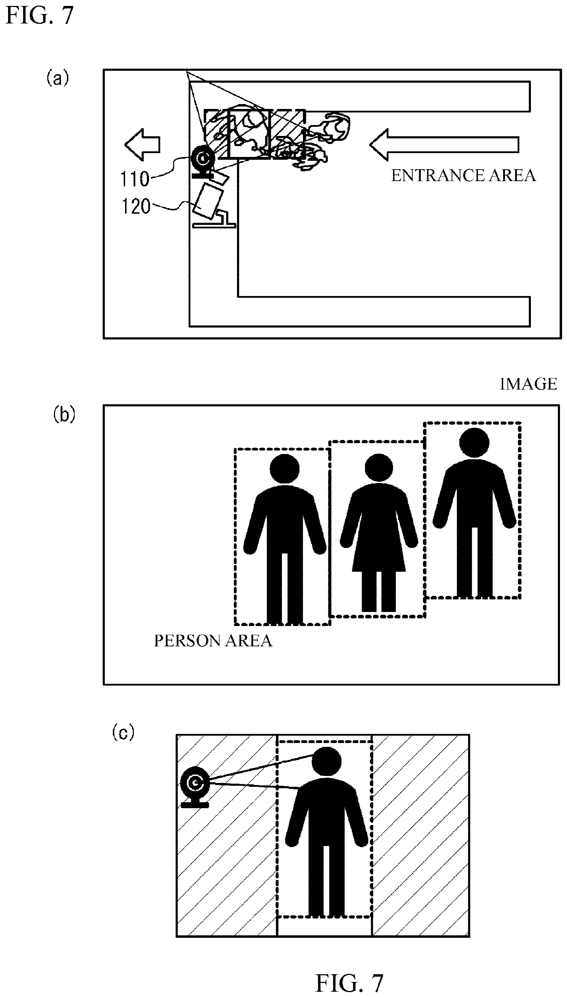

Next, FIG. 7(a) is a diagram illustrating an example of multiple users checking in one after another. FIG. 7(a) is a top view of the entrance area. As illustrated in FIG. 7(a), a user enters the entrance area, approaches the gate, and stops in a location where the biometric sensor 110 can acquire the user's biometric data. This causes the user to stop in the shooting range of the linking camera 120. However, because other users wait their turn behind the user, people other than the target person will also be captured in the shooting range of the linking camera 120. For example, as illustrated in FIG. 7(b), multiple person areas surrounded by dotted lines may be detected.

When multiple users check in one after another, the users often appear shifted horizontally in the image. Therefore, as illustrated in FIG. 7(c), the detection area controller 14 narrows the detection target area for detecting a person area from the image in the horizontal direction. In the example of FIG. 7(c), the area between the two hatched areas corresponds to the narrowed detection target area. The vertical height of the detection target area may be the same as that of the original image. For example, the range in the image in which the user is positioned when facing the linking camera 120 is predetermined. Therefore, the detection target area is narrowed to the range in which the user faces the linking camera 120. In the example of FIG. 7(c), the number of the person area surrounded by the dotted line in the detection target area can be one. Then, the direction determiner 15 determines whether the person in the person area is facing a predetermined direction.

If the direction determiner 15 subsequently determines that the target person is facing the linking camera 120, the feature extractor 16 extracts appearance feature information from the detected person area as registered feature information. Because the person area is accurately detected, the registered feature information can also be accurately extracted.

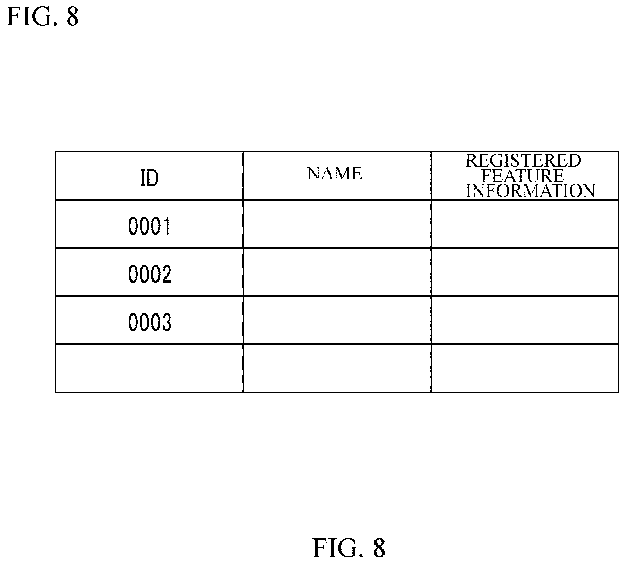

The registration information storage 17 stores the registered feature information extracted by the feature extractor 16 in association with the ID identified by the authenticator 19. FIG. 8 is a diagram illustrating an example of a registration information table stored in the registration information storage 17. As illustrated in FIG. 8, the registration information table stores registered feature information in association with the user's ID, name, or the like.

The user then moves in the continuous authentication space. The acquirer 11 acquires an image from the tracking camera 130. The person detector 12 detects a person area from the image. The feature extractor 16 extracts appearance feature information for matching from the detected person area. The ReID processor 18 compares the matching feature information extracted by the feature extractor 16 with the registered feature information stored in the registration information storage 17. For example, the ReID processor 18 calculates the similarity between the matching feature information extracted by the feature extractor 16 and each piece of registered feature information. The ReID processor 18 identifies a person detected by the tracking camera 130 as the user of the registered feature information whose similarity exceeds a threshold. Note that in this case, if the direction determiner 15 does not determine that a person in the image is facing a predetermined direction, the image may not be processed by the ReID processor 18. This allows images from the other tracking cameras 130 to be prioritized, thereby improving the accuracy of continuous authentication. Furthermore, if the person number determiner 13 determines that there are multiple people in the image, the detection area controller 14 may narrow the detection target area.

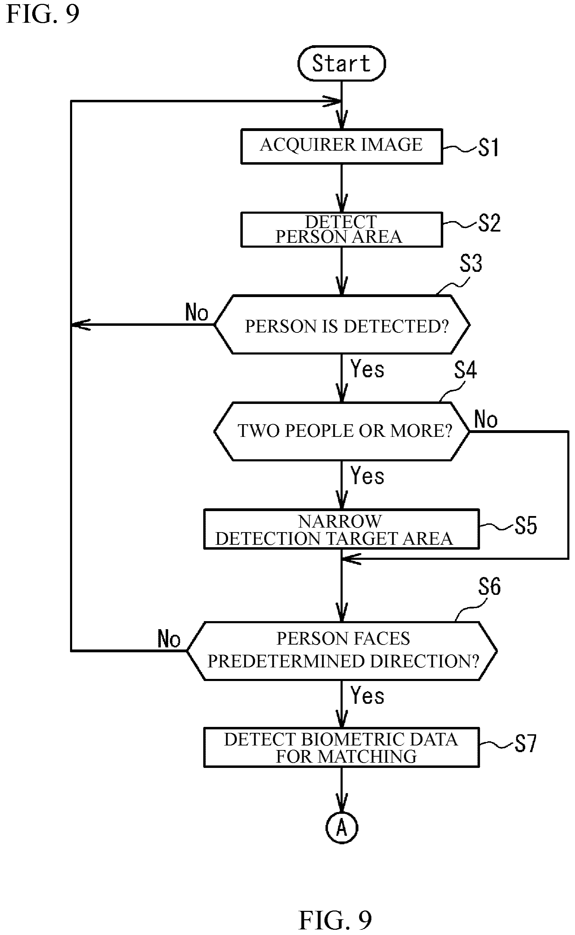

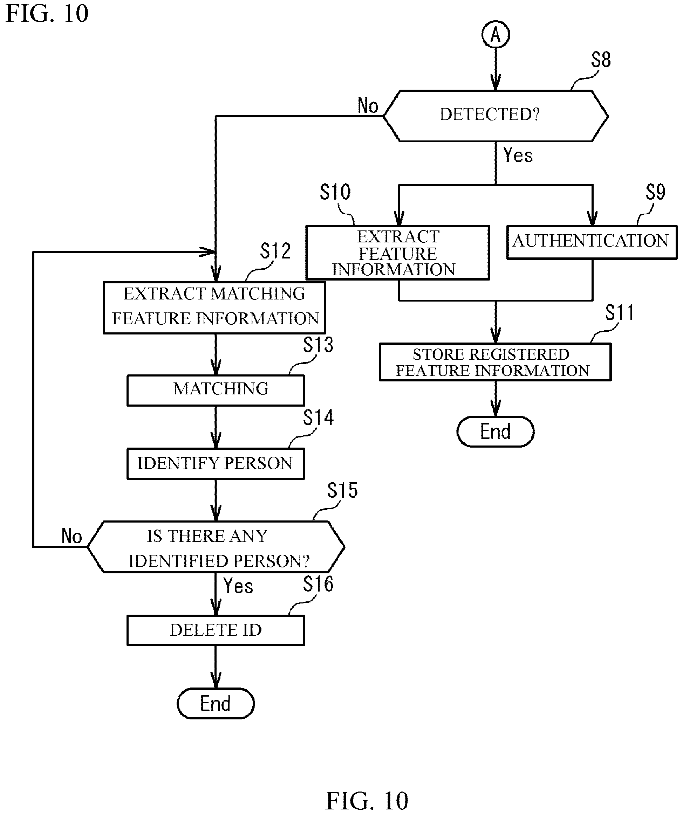

FIG. 9 and FIG. 10 are flowcharts illustrating an example of the operation of the information processing device 100. The operational flow of the information processing device 100 will be described with reference to FIG. 9 and FIG. 10. The flowcharts in FIG. 9 and FIG. 10 are executed at a predetermined cycle. The flowcharts in FIG. 9 and FIG. 10 are also executed independently for each of the linking camera 120 and the tracking camera 130.

First, the acquirer 11 acquires an image from either the linking camera 120 or the tracking camera 130 (step S1).

Next, the person detector 12 detects a person area from the image acquired in step S1 (step S2).

The person detector 12 determines whether a person has been detected (step S3). If step S3 returns "No," processing resumes from step S1.

If step S3 returns "Yes," the person number determiner 13 determines whether the number of people detected is two or more (step S4).

If step S4 returns "Yes," the detection area controller 14 narrows the target detection area (step S5), as illustrated in FIG. 7(c). If step S4 returns "No," step S5 is not executed. Therefore, the target detection area is not narrowed.

After step S5 is executed, or if step S4 returns "No," the direction determiner 15 determines whether the person in the person area included in the target detection area is facing a predetermined direction (step S6). For example, as described in FIG. 6(a) to FIG. 6(c), the direction determiner 15 determines whether the person is facing the camera. In this case, the direction determiner 15 may also determine whether the size of the person in the target detection area is equal to or greater than a threshold, as described in FIG. 6(d).

If step S6 returns "No," processing resumes from step S1. Therefore, if the person in the target detection area is not facing a specific direction, feature information will not be extracted. If step S6 returns "Yes," the biometric sensor 110 detects biometric data for matching from the user checking in (step S7).

Next, the authenticator 19 determines whether the biometric sensor 110 can detect biometric data for matching (step S8). If the camera capturing images in step S1 is the tracking camera 130, the authenticator 19 returns "No" in step S8. If the camera capturing images in step S1 is the linking camera 120, the authenticator 19 returns "Yes" in step S8.

If step S8 returns "Yes," the authenticator 19 performs authentication processing (step S9). Specifically, the authenticator 19 compares the matching biometric data with each piece of registered biometric data stored in the registered data storage 20, and identifies the target person as a user of the registered biometric data whose similarity exceeds a threshold. In parallel with step S9, the feature extractor 16 extracts appearance feature information from the person area (step S10).

After steps S9 and S10 are executed, the registration information storage 17 associates the feature information with the ID identified in step S9 and stores it as registered feature information (step S11). After step S11 is executed, execution of the flowchart ends.

If the determination in step S8 is "No," the feature extractor 16 extracts appearance feature information for matching from the person area and stores it (step S12).

Next, the ReID processor 18 compares the matching feature information extracted in step S12 with each piece of registered feature information stored in the registration information storage 17 and calculates the similarity (step S13).

Next, the ReID processor 18 identifies the person in the person area as the person whose registered feature information had the highest similarity among the similarities calculated in step S13 (step S14).

Next, the ReID processor 18 determines whether a person whose ID has been identified has been absent for a threshold time or longer (step S15).

If step S15 returns "No," the process is repeated from step S12. If step S15 returns "Yes," the ReID processor 18 deletes the ID that had been identified up to that point (step S16).

According to this embodiment, when multiple people are detected from an image containing a person to be authenticated who has been successfully authenticated using identification information such as biometric data, the target detection area for detecting the person in the image is controlled. For example, the target detection area for the image is narrowed. This increases the accuracy of detecting the person area even when multiple people appear in the image. As a result, the accuracy of detecting the person is improved. By extracting feature information from this target person and linking it to an identifier such as the ID of the person to be authenticated, highly accurate continuous authentication can be achieved. By extracting feature information from the person to be authenticated when it is determined that the person to be authenticated is facing a predetermined direction, the accuracy of subsequent continuous authentication can be improved.

(Variations) Next, we will explain various variations. For example, the degree to which the detection target area is narrowed may be determined based on the angle of view and focal length of the linking camera 120. For example, if a person with a standard build is standing at the focal length of the linking camera 120, it is preferable to narrow the detection target area so that the entire body of the person is captured.

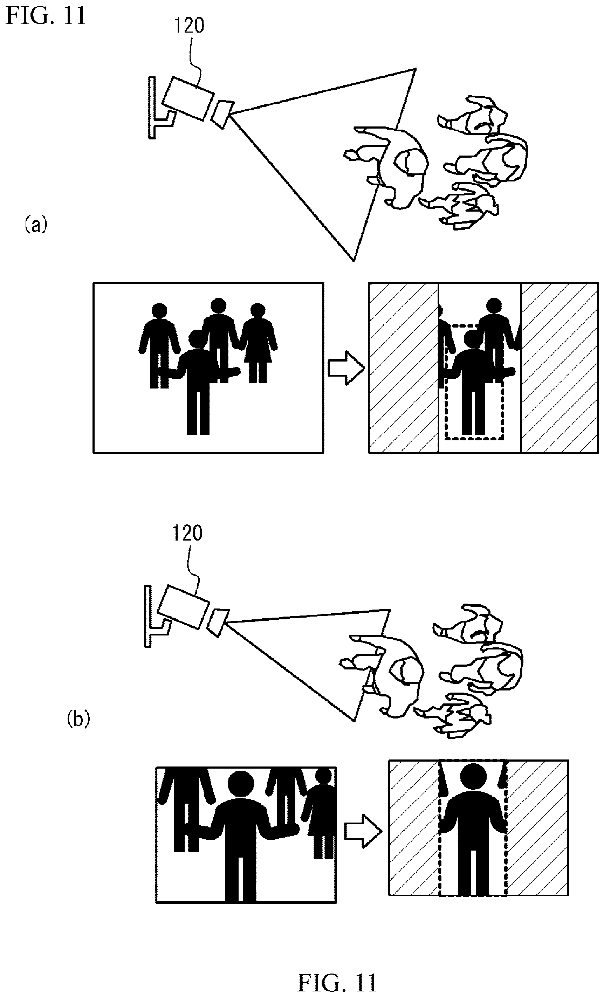

FIG. 11(a) is a diagram of an example when the angle of view is wide. In FIG. 11(a), because the angle of view is wide, if a person with a standard build is standing at the focal length, the area in which the person is captured is narrow. Therefore, the detection target area is set narrow. FIG. 11(b) is a diagram illustrating an example when the angle of view is narrow. In FIG. 11(b), because the angle of view is narrow, if a person with a standard build is standing at the focal length, the area in which the person is captured is wide. Therefore, the detection target area is set wide.

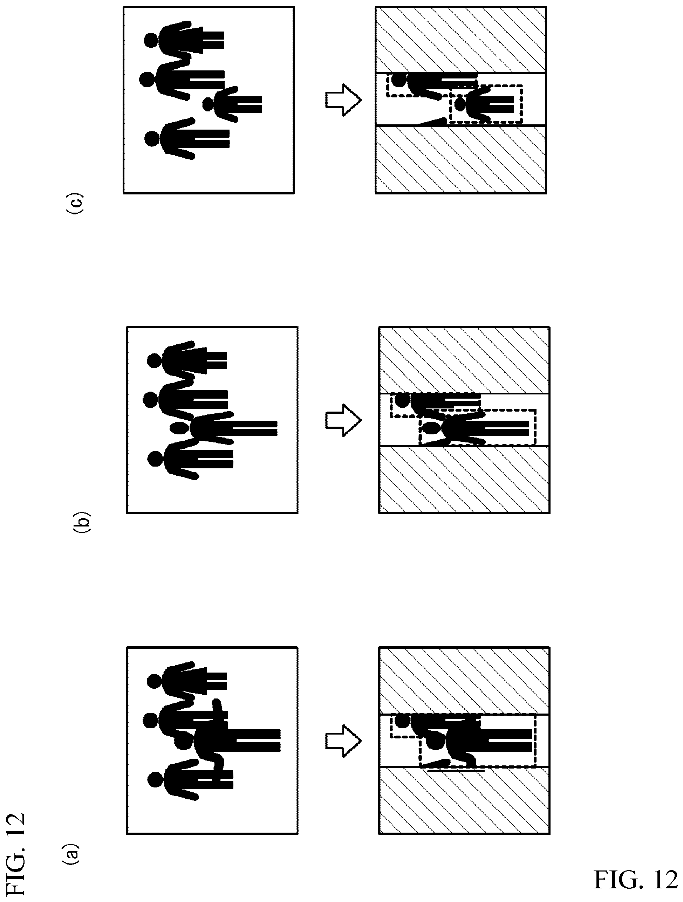

Furthermore, it is expected that users checking in will have a variety of body types. It is also expected that users checking in will face a variety of directions. When multiple people appear in an image, as illustrated in FIG. 12(a) to FIG. 12(c), multiple people may appear in the detection target area, and the heights and horizontal widths of the person areas may differ. Therefore, if person areas of different heights and widths are detected in the detection target area, the feature extractor 16 may extract feature information from the tallest person area.

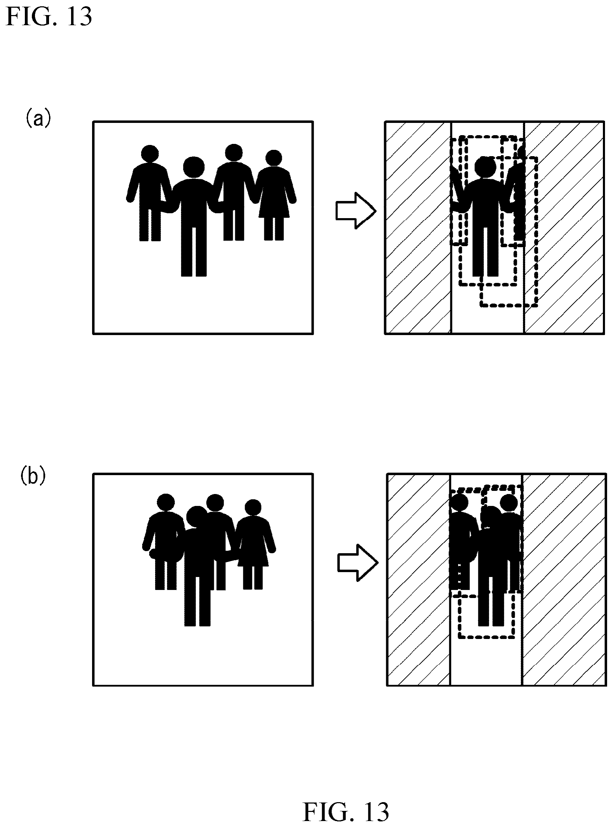

Furthermore, as illustrated in FIG. 13(a) and FIG. 13(b), multiple person areas may overlap in the detection target area. Therefore, if multiple person areas overlap in the detection target area, the feature extractor 16 may extract feature information from the tallest person area.

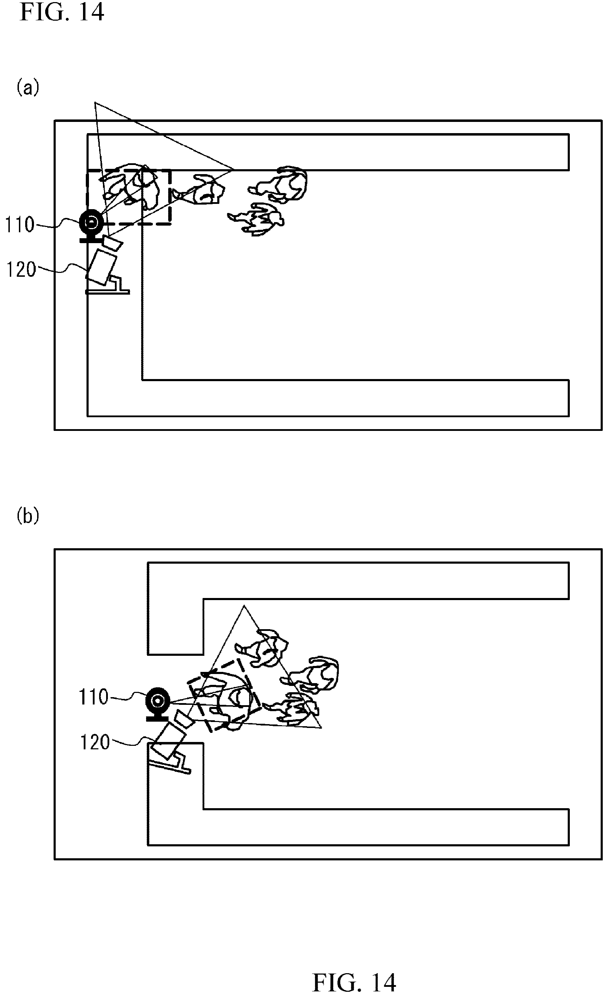

It is preferable that the angle of the linking camera 120 be adjusted so that a single user is captured as much as possible. For example, as illustrated in FIG. 14 (b), if the shooting range of the linking camera 120 is a wide space where multiple users can be located, there is a high possibility that multiple users will be captured in the image captured by the linking camera 120.

In contrast, as illustrated in FIG. 14(a), it is preferable to set the angle of the linking camera 120 so that it can capture an image of a space that narrows horizontally from a space that widens horizontally. In this case, it is difficult for other users to enter the narrow space while waiting their turn, and the number of people appearing in the image captured by the linking camera 120 can be reduced. This reduces the number of people appearing in the target detection area, making it possible to accurately extract feature information of the user's appearance. For example, it is preferable that the narrow space be narrow enough to accommodate only one person.

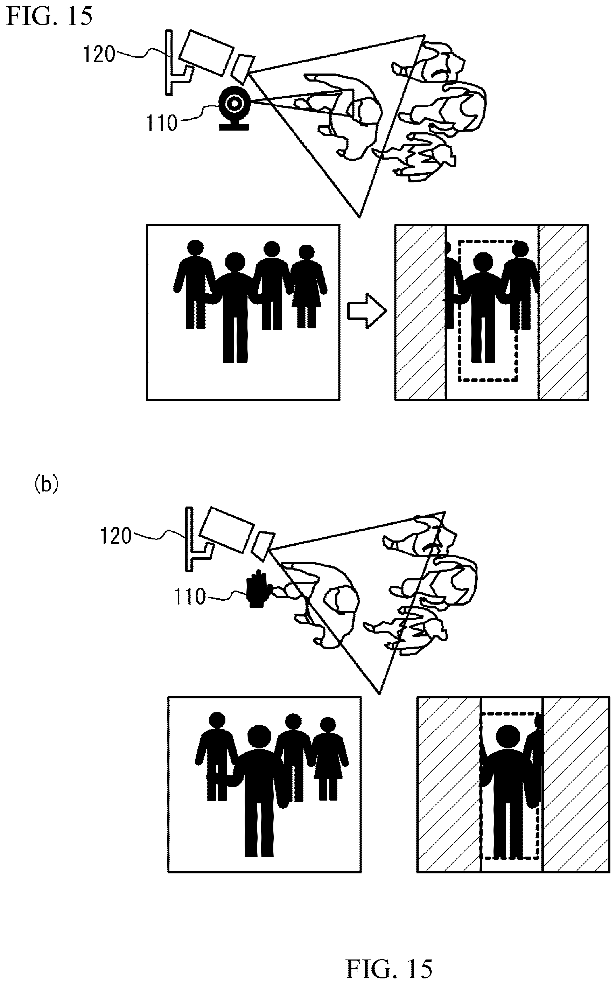

Note that, for highly accurate authentication during check-in, when face authentication is performed using a face camera, as illustrated in FIG. 15(a), the distance between the user and the biometric sensor 110 used as the face camera is long, which may result in a large range of fluctuation in the user's position. Therefore, there is a risk of variation in the accuracy of extracting feature information using the linking camera 120. In contrast, as illustrated in FIG. 15(b), with vein authentication or fingerprint authentication, the distance between the user and the biometric sensor 110 is shorter, reducing the range of variation in the user's position. This reduces the variability in accuracy when extracting feature information using the linking camera 120. Therefore, using vein authentication or fingerprint authentication is preferable.

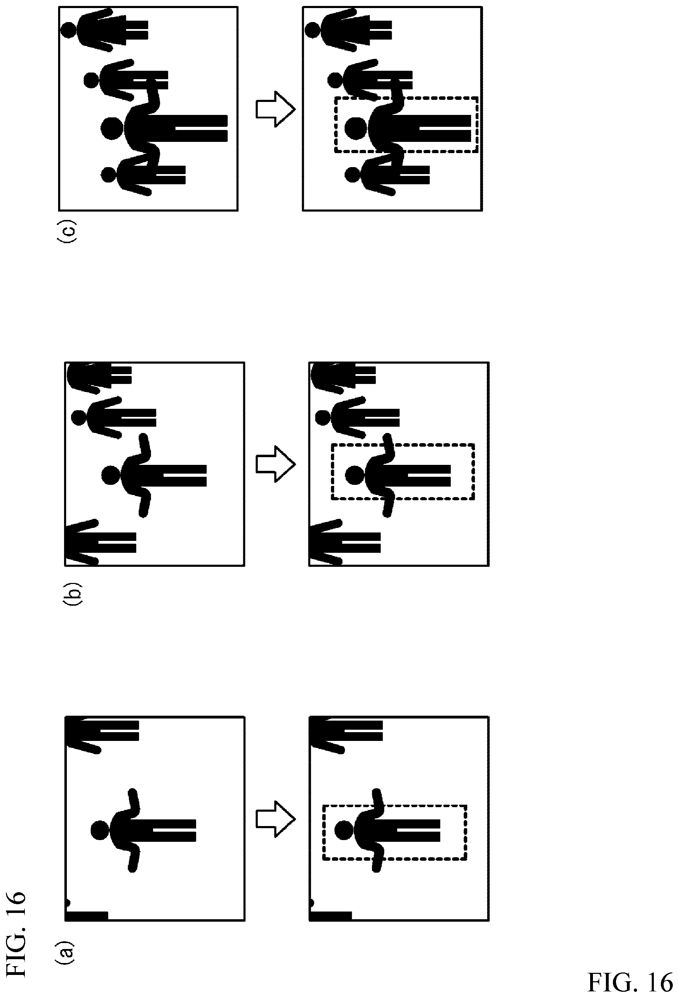

A person area may be detected using time-series images acquired by the linking camera 120. For example, using time-series images, a person can be tracked by tracking. By detecting the person area for the person being tracked, the target person area can be accurately detected. For example, in FIG. 16(a) to FIG. 16(c), the arrows indicate the time after a predetermined time. As such, people can be tracked using time-series images. For example, using time-series images, the direction of movement of each person can be detected. For example, by focusing on a predetermined point, such as the center of each person's area, the direction of movement of each person can be detected. Because the direction from which the person in front approaches the linking camera 120 is known in advance, it is possible to determine which person in a person area is the person in front. Alternatively, for example, the person in front will stop moving and remain stationary near the biometric sensor 110. Therefore, it is possible to determine whether the person in the person area with the smallest amount of movement per unit time is the person in front. Feature information may be extracted from the person area determined to be the person in front.

(Applicable embodiment) Next, an applicable embodiment will be described. The biometric authentication system 200 can analyze the behavior of checked-in people using images captured by the camera. Facilities are such as railway facilities, airports, shops, residences, hotels, castles, amusement parks, or the like. Gates located at facilities are located at entrances to shops, residences, hotels, castles, amusement parks, railway facilities, and airport boarding gates.

First, an example will be described in which the check-in target is a railway facility or an airport. In the case of a railway facility or an airport, the gate is located at the boarding gate of the railway facility or airport. At this time, if the person's biometric information has been pre-registered as a train or airplane passenger, the information processing device 100 determines that authentication using the person's biometric information has been successful.

Next, an example will be described in which the check-in target is a store. When the check-in target is a store, the gate is located at the store's entrance. At this time, if the person's biometric information is registered as a member of the store, the information processing device 100 determines that authentication using the person's biometric information has been successful.

Now, returning to FIG. 1, an applicable embodiment will be described in which the facility is a store. When checking in, the information processing device 100 acquires biometric information of a person passing through a gate located at a predetermined position within the store. Specifically, the information processing device 100 acquires, from the biometric sensor 110, a vein image acquired by a vein sensor mounted on a gate located at the store's entrance, and performs authentication. At this time, the information processing device 100 identifies the user's ID, name, or the like from the biometric information.

Note that the biometric sensor 110 and the linking camera 120 are mounted on a gate located at a predetermined position within the facility, and detect the biometric information of a person passing through the gate. At this time, the information processing device 100 can also acquire the person's biometric information using the linking camera 120.

Next, when authentication using the person's biometric information is successful, the information processing device 100 generates feature information for the person by analyzing an image containing the person passing through the gate. Specifically, the information processing device 100 performs authentication by identifying the user ID or name of the person passing through the gate. Then, when authentication is successful, the information processing device 100 analyzes an image containing the person passing through the gate to generate feature information for the person. For example, the feature information for the person is skeletal information including the person's joints. At this time, the information processing device 100 determines whether the person to be authenticated is facing the camera used to acquire the image in the direction of travel through the gate. If it is determined that the person to be authenticated is facing the direction of travel through the gate, it generates feature information from the object detection area. The information processing device 100 then associates the ID and name of the user checking in with the generated feature information and stores them in a storage.

The information processing device 100 then uses the feature information stored in the storage to identify the user's ID or name and track the person moving in the store. For example, the information processing device 100 performs gait authentication using skeletal information, including the person's joints, using an existing skeletal estimation algorithm. The information processing device 100 tracks the person by comparing whether the person passing through the gate is the same as the person in the image captured by the tracking camera 130, and identifies the person's trajectory from when they entered the store to when they left. An existing skeletal estimation algorithm is, for example, a skeletal estimation algorithm that uses deep learning, such as HumanPose Estimation, such as DeepPose or OpenPose.

The information processing device 100 also identifies the product acquired by the person from among multiple products placed in the store. Specifically, the information processing device 100 uses skeletal information, including the person's joints, to determine whether the person is holding a product placed in the store, thereby identifying the product acquired by the person from among multiple products.

The information processing device 100 associates the person's identification information with the product acquired by the person in the storage. The information processing device 100 also generates information that associates the person's trajectory from the time they enter the store to the time they leave the store with the user's ID, name, or the like. For example, the information processing device 100 can identify the items purchased by the person in the store by generating information that associates the ID or name of the user who checks in with the person's trajectory in the store and the product acquired by the person. This makes it possible to analyze the purchasing behavior of the person as they move around the store after checking in.

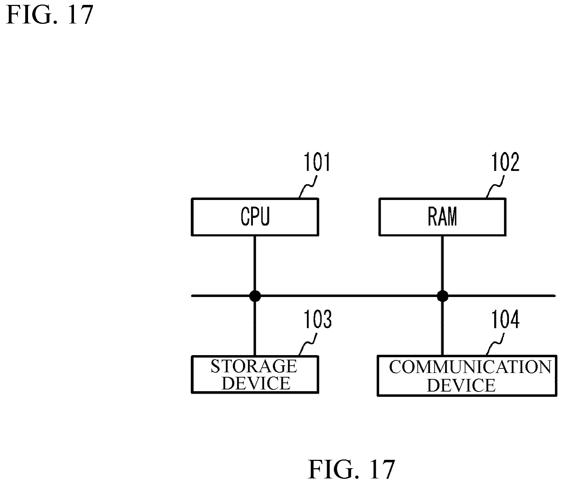

FIG. 17 is a block diagram illustrating the hardware configuration of the information processing device 100. As illustrated in FIG. 17, the information processing device 100 includes a CPU 101, RAM 102, storage device 103, and communication device 104. These devices are connected via a bus or other means. The CPU (Central Processing Unit) 101 is a central processing unit. The RAM (Random Access Memory) 102 is volatile memory that temporarily stores programs executed by the CPU 101 and data processed by the CPU 101. The storage device 103 is a non-volatile storage device. For example, the storage device 103 can be a ROM (Read Only Memory), a solid-state drive (SSD) such as flash memory, or a hard disk driven by a hard disk drive. The functions of each unit of the information processing device 100 are realized by the CPU 101 executing a control program stored in the storage device 103. Note that the functions of each unit of the information processing device 100 may be configured using dedicated circuits or the like. The communication device 104 is an interface to a telecommunications line.

Note that in the above example, the user's ID is identified using the user's biometric information acquired from the biometric sensor 110, but this is not limited to this. For example, the user's ID may be identified based on whether a password entered by the user using an input device matches a pre-registered password. Even in this case, when the user enters information using the input device, visual feature information can be extracted from the image acquired by the linking camera 120.

In the above-mentioned embodiment, the detection area controller 14 is an example of a detection area controller configured to, when a plurality of people are detected from an image including a person to be authenticated who has been successfully authenticated using identification information, control a target detection area for detecting the person in the image. The feature extractor 16 is an example of a feature extractor configured to extract feature information of person from the target detection area which is controlled. The registration information storage 17 is an example of a registered information storage configured to link the feature information to an identifier of the person to be authenticated and store as registered feature information. The direction determiner 15 is an example of a direction determiner configured to determine whether the person to be authenticated is facing a predetermined direction relative to a camera to acquire the image.

The above-described embodiment is a preferred example of the present invention. However, the present disclosure is not limited to this, and various modifications can be made without departing from the scope of the present invention.

### Description of Symbols

- 11: Acquirer
- 12: Person detector
- 13: Person counter
- 14: Detection area controller
- 15: Direction determiner
- 16: Feature extractor
- 17: Registered information storage
- 18: ReID processor
- 19: Authenticator
- 20: Registered data storage
- 100: Information processing device
- 110: Biometric sensor
- 120: Linking camera
- 130: Tracking camera
- 200: Biometric authentication system

## Claims

1. A control method **characterized in that** a computer executes a process including:
when a plurality of people are detected from an image including a person to be authenticated who has been successfully authenticated using identification information, controlling a target detection area for detecting the person in the image.

2. The control method as claimed in claim 1, **characterized in that** the computer executes:
extracting feature information of person from the target detection area which is controlled; and
linking the feature information to an identifier of the person to be authenticated.

3. The control method as claimed in claim 1, **characterized in that**
the target detection area is controlled by narrowing the target detection area relative to a range of the image.

4. The control method as claimed in claim 1, **characterized in that**
the target detection area is narrowed according to an angle of a view and a focal length of a camera used to acquire the image.

5. The control method as claimed in claim 2, **characterized in that**
when two or more person areas are detected from the target detection area, feature information of person is extracted from a person area of a tallest person.

6. The control method as claimed in claim 1, **characterized in that**
a person area is detected from a person being tracked using a time series of images including the person to be authenticated.

7. The control method as claimed in claim 2, **characterized in that**
it is determined whether the person to be authenticated is facing a predetermined direction relative to a camera to acquire the image, and if it is not determined that the person to be authenticated is facing the predetermined direction, the feature information is not extracted from the target detection area.

8. The control method as claimed in claim 1, **characterized in that**
biometric information is used as the identification information.

9. The control method as claimed in claim 1, **characterized in that**
a vein feature is used as the identification information.

10. The control method as claimed in claim 1, **characterized in that**
a camera photographs a space which is narrow in a horizontal direction from a space which is wide in the horizontal direction.

11. The control method as claimed in claim 1, **characterized in that**:
biometric information of a person passing through a gate arranged at a predetermined location in a facility is acquired, based on a detection result of a sensor or a camera which is mounted on the gate and detects the biometric information of the person;
when authentication using the biometric information of the person is successful, an image including the person passing through the gate is analyzed to generate feature information of the person;
the identification information of the person identified from the biometric information and the feature information of the person which is generated are registered in a storage in association with each other; and
a person moving in the facility is tracked by using the feature information which is registered.

12. The control method as claimed in claim 11, **characterized in that**:
it is determined whether the person to be authenticated is facing a movement direction of the gate with respect to the camera to acquire the image, and feature information of the person is generated from the target detection area when it is determined that the person to be authenticated is facing the movement direction of the gate;
the feature information of person is skeletal information of person; and
a person within the facility is tracked using the skeletal information of person.

13. The control method as claimed in claim 11, **characterized in that**:
the facility is either a railway facility or an airport;
the gate is located at a boarding gate of the railroad facility or the airport; and
if the biometric information of the person which is acquired is pre-registered as a train or airplane passenger, it is determined that authentication using the biometric information of the person has been successful.

14. The control method as claimed in claim 11, **characterized in that**:
the facility is a store,
the gate is disposed at an entrance of the store,
if the biometric information of the person which is acquired is registered as a member of the store, it is determined that authentication using the biometric information of the person has been successful;
by tracking a person moving in the store, a trajectory of the person from entering the store to leaving the store is identified; and
information that associates the trajectory of the person with the identification information of the person is generated.

15. A control program **characterized by** causing a computer to execute a process including:
when a plurality of people are detected from an image including a person to be authenticated who has been successfully authenticated using identification information, controlling a target detection area for detecting the person in the image.

16. The control program as claimed in claim 15, **characterized in that** the computer is caused to execute:
extracting feature information of person from the target detection area which is controlled; and
linking the feature information to an identifier of the person to be authenticated.

17. The control program as claimed in claim 15, **characterized in that**
the target detection area is controlled by narrowing the target detection area relative to a range of the image.

18. The control program as claimed in claim 15, **characterized in that**
the target detection area is narrowed according to an angle of a view and a focal length of a camera used to acquire the image.

19. The control program as claimed in claim 16, **characterized in that**
when two or more person areas are detected from the target detection area, feature information of person is extracted from a person area of a tallest person.

20. The control program as claimed in claim 15, **characterized in that**
a person area is detected from a person being tracked using a time series of images including the person to be authenticated.

21. The control program as claimed in claim 16, **characterized in that**
it is determined whether the person to be authenticated is facing a predetermined direction relative to a camera to acquire the image, and if it is not determined that the person to be authenticated is facing the predetermined direction, the feature information is not extracted from the target detection area.

22. The control program as claimed in claim 15, **characterized in that**
biometric information is used as the identification information.

23. The control program as claimed in claim 15, **characterized in that**
a vein feature is used as the identification information.

24. The control program as claimed in claim 15, **characterized in that**
the camera photographs a space which is narrow in a horizontal direction from a space which is wide in the horizontal direction.

25. An information processing device **characterized by** comprising:
a detection area controller configured to, when a plurality of people are detected from an image including a person to be authenticated who has been successfully authenticated using identification information, control a target detection area for detecting the person in the image.

26. The information processing device as claimed in claim 25 **characterized by** further comprising:
a feature extractor configured to extract feature information of person from the target detection area which is controlled; and
a registered information storage configured to link the feature information to an identifier of the person to be authenticated and store as registered feature information.

27. The information processing device as claimed in claim 25, **characterized in that**
the detection area controller controls the target detection area by narrowing the target detection area relative to a range of the image.

28. The information processing device as claimed in claim 25, **characterized in that**
the detection area controller narrows the target detection area according to an angle of a view and a focal length of a camera used to acquire the image.

29. The information processing device as claimed in claim 26, **characterized in that**
when two or more person areas are detected from the target detection area, the feature extractor extracts feature information of person from a person area of a tallest person.

30. The information processing device as claimed in claim 25, **characterized in that**
the person area is a person area detected from a person being tracked using a time series of images including the person to be authenticated.

31. The information processing device as claimed in claim 25, **characterized by** further comprising:
a direction determiner configured to determine whether the person to be authenticated is facing a predetermined direction relative to a camera to acquire the image,
wherein if it is not determined that the person to be authenticated is facing the predetermined direction, the feature extractor does not extract the feature information from the target detection area.

32. The information processing device as claimed in claim 25 **characterized in that**
biometric information is used as the identification information.

33. The information processing device as claimed in claim 25, **characterized in that**
a vein feature is used as the identification information.

34. The information processing device as claimed in claim 25, **characterized in that**
the camera photographs a space which is narrow in a horizontal direction from a space which is wide in the horizontal direction.
